(19) Europäisches Patentamt
European Patent Office
Office européen des brevets

(11) Veröffentlichungsnummer: **0 319 709 B1**

# (12) EUROPÄISCHE PATENTSCHRIFT

(45) Veröffentlichungstag der Patentschrift: **03.06.92**

(51) Int. Cl.5: **C09D 5/44**, C08J 3/07, C08G 59/14

(21) Anmeldenummer: **88118305.7**

(22) Anmeldetag: **03.11.88**

Verbunden mit 88910034.3/0389527 (europäische Anmeldenummer/Veröffentlichungsnummer) durch Entscheidung vom 26.07.91.

## (54) Verfahren zur Herstellung abscheidbarer Bindemitteldispersionen mit Vernetzern auf der Basis von mit Hydroxylgruppen verkappten Polyisocyanaten.

(30) Priorität: **11.11.87 DE 3738219**

(43) Veröffentlichungstag der Anmeldung: **14.06.89 Patentblatt 89/24**

(45) Bekanntmachung des Hinweises auf die Patenterteilung: **03.06.92 Patentblatt 92/23**

(84) Benannte Vertragsstaaten: **AT BE CH DE ES FR GB IT LI NL SE**

(56) Entgegenhaltungen:
**EP-A- 0 059 895**
**EP-A- 0 074 634**
**EP-A- 0 118 743**
**EP-A- 0 135 811**
**FR-A- 2 376 881**

(73) Patentinhaber: **BASF Lacke + Farben Aktiengesellschaft**
**Max-Winkelmann-Strasse 80**
**W-4400 Münster(DE)**

(72) Erfinder: **Geist, Michael, Dr.**
**Fürstenstrasse 28**
**W-6700 Ludwigshafen(DE)**
Erfinder: **Cibura, Klaus, Dr.**
**25680 W. 12 Mile Road**
**Southfield Michigan 48034(US)**
Erfinder: **Sadlowski, Jürgen, Dr.**
**Weitkamp 36**
**W-4400 Münster(DE)**
Erfinder: **Jouck, Walter, Dr.**
**Grüner Weg 7**
**W-4400 Münster(DE)**
Erfinder: **Ott, Günther, Dr.**
**Von-Holte-Strasse 101 a**
**W-4400 Münster(DE)**
Erfinder: **Dangschat, Manfred**
**Weitkamp 36**
**W-4406 Drensteinfurt(DE)**
Erfinder: **Reimann, Manfred**
**Coerdeplatz 1 a**
**W-4400 Münster(DE)**

(74) Vertreter: **Leifert, Elmar, Dr.**
**BASF Lacke + Farben AG Patentabteilung**
**Max-Winkelmann-Strasse 80 Postfach 61 23**
**W-4400 Münster(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zur Herstellung wäßriger, kathodisch abscheidbarer und thermisch bei Temperaturen unter 160° C und Einbrennzeiten ≦ 30 min durch zugemischte Vernetzer härtbarer Elektrotauchlacke, die als kathodisch abscheidbare Bindemittel modifizierte Epoxid-Aminaddukte und als Vernetzer mit Hydroxylgruppen blockierte Polyisocyanate enthalten, bei dem

(1)

(A) Polyepoxide, die im Durchschnitt mehr als 1 Epoxidgruppe pro Molekül enthalten und

(B) Verbindungen, die eine oder mehrere, bevorzugt 2, an aromatische und/oder (cyclo)aliphatische Molekülfragmente gebundene Hydroxylgruppen pro Molekül enthalten, in Anwesenheit von Katalysatoren bei höheren Temperaturen, bevorzugt zwischen 100 und 180° C zu

(c) epoxidhaltigen Zwischenprodukten umgesetzt werden,

(2)

(E) Amine

an die im Zwischenprodukt noch vorhandenen freien Epoxidgruppen angelagert werden und entweder

(4a) diese Reaktionsprodukte in einer Wasser-Säure-Mischung dispergiert und

(F) mit Hydroxylgruppen blockierte Polyisocyanate als Vernetzer zugemischt werden oder

(4b) diesen Reaktionsprodukten

(F) mit Hydroxylgruppen blockierte Polyisocyanate als Vernetzer zugemischt werden und diese Mischung in einer Wasser-Säure-Mischung dispergiert wird.

dadurch gekennzeichnet, daß

(2) den in Stufe (1) erhaltenen epoxidgruppenhaltigen Zwischenprodukten zunächst ein Lösemittel (D) oder Lösemittelgemisch (D) unter äußerer Kühlung zugegeben wird und die entstandene Harzlösung, ggf. unter Anlegen eines Vakuums, so lange zum Rückflußsieden gebracht wird, bis die Temperatur der Lösung auf 95° C bis 20° C abgesunken ist.

Die kathodische Elektrotauchlackierung ist ein vor allem zum Grundieren häufig angewandtes Lackierverfahren, bei dem wasserverdünnbare, kationische Gruppen tragende Kunstharze mit Hilfe von Gleichstrom auf elektrisch leitende Körper aufgebracht werden. Die für die kathodische Abscheidung geeigneten Bindemittel enthalten überwiegend Aminogruppen, die zur Wasserlöslichmachung mit Säuren neutralisiert werden.

Eine besonders bevorzugte Bindemittelgruppe stellt die Gruppe der Bindemittel dar, die auf Basis modifizierter Epoxidharze aufgebaut sind. Bindemittel dieses Typs sind z. B. in folgenden Patentdokumenten offenbart: US-A-4,031,050; US-A-3,799,854; US-A-3,984,299; US-A-4,252,703; US-A-4,332,711; DE-A-3,108,073.

Vernetzbar sind sie durch zugemischte, mit Hydroxylgruppen blockierte Polyisocyanate. Diese Vernetzer weisen daher bei Raumtemperatur Urethangruppen (= verkappte Isocyanatgruppen) auf. Bei erhöhten Temperaturen werden dann die Verkappungskomponenten abgespalten und die Isocyanatgruppen zurückgebildet. Diese Isocyanatgruppen können anschließend die Vernetzung des Bindemittels über die darin enthaltenen Hydroxyl- und/oder primären und/oder sekundären Aminogruppen bewirken. Solche fremdvernetzenden Bindemittelsysteme sind derzeit Stand der Technik. Ihr Aufbau und ihre Herstellung sind z.B. in der DE-PS 31 08073, insbesondere in den Beispielen 1 bis 5, oder in der EP 74 634 A2, Beispiel A, beschrieben.

Die dort eingesetzten Vernetzer reagieren aufgrund der Struktur ihrer Verkappungskomponenten erst bei Temperaturen über 160°C. Somit kann ohne Probleme der in den Beispielen beschriebene Herstellungsweg eingehalten werden.

In den letzten Jahren wächst jedoch ständig das Bedürfnis nach Vernetzern, die bei wesentlich tieferen Einbrenntemperaturen wirksam werden. Dies hat z.B. in der Automobilindustrie die Ursache in der Mitverwendung von Kunststoffteilen beim Zusammenbau der Rohkarosserien.

Man hat daher versucht, geeignete verkappte Polyisocyanate als Vernetzer für gesenkte Einbrenntemperaturen bereitzustellen. So gebaute Vernetzer sind z.B. in der EP 118 743 A1 und in der EP 206 071 A2 beschrieben. Werden diese Vernetzer jedoch anstelle der oben beschriebenen Vernetzer eingesetzt, so erhält man keine reproduzierbaren Eigenschaften der Lackoberfläche, und es kommt zu Abrißerscheinungen sowie zu schlecht verlaufenden Oberflächen.

Es ist daher die Aufgabe der Erfindung, ein Verfahren zu schaffen, mit dem auch bei der Verwendung von Vernetzern mit niedrigen Einbrenntemperaturen und von modifizierten Epoxid-Aminaddukten als Bindemittel wäßrige Dispersionen erhalten werden, die nach der Weiterverarbeitung zu Elektrotauchlacken zu reproduzierbaren Oberflächen mit sehr guten mechanischen Eigenschaften bei der kathodischen Elektrotauchlackierung führen.

Diese Aufgabe wird erfindungsgemäß durch ein Verfahren zur Herstellung wäßriger, kathodisch abscheidbarer und thermisch bei Temperaturen unter 160° C und Einbrennzeiten ≦ 30 min durch zugemischte Vernetzer härtbarer Elektrotauchlacke gelöst, die als kathodisch abscheidbare Bindemittel modifizierte Epoxid-Aminaddukte und als Vernetzer mit Hydroxylgruppen blockierte Polyisocyanate enthalten, bei dem

(1)

(A) Polyepoxide, die im Durchschnitt mehr als 1 Epoxidgruppe pro Molekül enthalten und

(B) Verbindungen, die eine oder mehrere, bevorzugt 2, an aromatische und/oder (cyclo)aliphatische Molekülfragmente gebundene Hydroxylgruppen pro Molekül enthalten,

in Anwesenheit von Katalysatoren bei höheren Temperaturen, bevorzugt zwischen 100 und 180° C zu

(c) epoxidhaltigen Zwischenprodukten umgesetzt werden,

(3)

(E) Amine

an die im Zwischenprodukt noch vorhandenen freien Epoxidgruppen angelagert werden und entweder

(4a) diese Reaktionsprodukte in einer Wasser-Säure-Mischung dispergiert und

(F) mit Hydroxylgruppen blockierte Polyisocyanate als Vernetzer zugemischt werden oder

(4b) diesen Reaktionsprodukten

(F) mit Hydroxylgruppen blockierte Polyisocyanate als Vernetzer zugemischt werden und diese Mischung in einer Wasser-Säure-Mischung dispergiert wird,

dadurch qekennzeichnet, daß

(2) den in Stufe (1) erhaltenen epoxidgruppenhaltigen zwischenprodukten zunächst ein Lösemittel (D) oder Lösemittelgemisch (D) unter äußerer Kühlung zugegeben wird und die entstandene Harzlösung, ggf. unter Anlegen eines Vakuums, so lange zum Rückflußsieden gebracht wird, bis die Temperatur der Lösung auf 95° C bis 20° C abgesunken ist.

Im ersten Schritt des erfindungsgemäßen Verfahrens werden zunächst einmal aus den Komponenten (A) und (B) unter Katalyse epoxidhaltige Zwischenprodukte hergestellt.

Als Komponente (A) können alle Verbindungen eingesetzt werden, deren Moleküle im Durchschnitt mehr als 1 Epoxidgruppe enthalten. Bevorzugt sind solche Verbindungen, die 2 Epoxidgruppen im Molekül enthalten und ein relativ niedriges Molekulargewicht von höchstens 750, bevorzugt 350 bis 500, haben.

Besonders bevorzugte Epoxidverbindungen sind aus Polyphenolen und Epihalohydrinen hergestellte Polyglycidylether von Polyphenolen. Als Polyphenol kann bevorzugt Bisphenol A eingesetzt werden.

Es können auch Polyglycidylester von Polycarbonsäuren eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten alicyclischen Verbindung erhält.

Als Komponente (B) werden Verbindungen eingesetzt, die eine oder mehrere, bevorzugt 2, an aromatische und/oder (cyclo)aliphatische Molekülfragmente gebundene Hydroxylgruppen pro Molekül enthalten.

Die als Komponente (B) in Betracht kommenden Verbindungen schließen sowohl nieder- als auch hochmolekulare Verbindungen ein.

Geeignete niedermolekulare (B)-Komponenten bestehen aus phenolischen, aliphatischen und/oder alicyclischen polyfunktionellen Alkoholen mit einem Molekulargewicht unter 350.

Als Beispiele seien genannt:

Diole, wie Ethylenglykol, Dipropylenglykol, Triglykol, 1,2-Propandiol, 1,3-Propandiol, 2,2-Dimethyl-1,3-propandiol, 2-Methyl-2-propyl-1,3-propandiol, 1,2-Butandiol, 1,4-Butandiol, 2-Ethyl-1,4-butandiol, Buten-2-diol-1,4, 1,2-Pentandiol, 1,5-Pentandiol, 3-Methyl-1,5-pentandiol, 1,6-Hexandiol, 2-Hydroxyethylhydroxyaceat, 2,2-Dimethyl-3-hydroxypropyl-2,2-dimethylhydroxypropionat, 4,4′-Methylen-biscyclohexanol und 4,4′-Isopropylidenbiscyclohexanol. Einige bevorzugte Diole sind 2,2-Dimethyl-1,3-propandiol und 3-Methyl-1,5-pentandiol.

Beispiele für höhermolekulare (B)-Komponenten sind Polyesterpolyole, Polyetherpolyole oder Polycaprolactonpolyole verschiedener Funktionalität und Molekulargewichte.

Für die Komponente (B) geeignete Polyalkylenetherpolyole entsprechen der allgemeinen Formel:

$$H-\left[O-(CHR)_n\right]_m-OH$$

in der R = Wasserstoff oder ein niedriger Alkylrest, ggf. mit verschiedenen Substituenten, ist, n = 2 bis 6 und m = 3 bis 50 oder noch höher ist. Beispiele sind Poly(oxytetramethylen)glykole und Poly(oxyethylen)-glykole.

Die bevorzugten Polyalkylenetherpolyole sind Poly(oxytetramethylen)glykole mit einem Molekulargewicht im Bereich von 350 bis 1000.

Polyesterpolyole können ebenfalls als (B)-Komponenten verwendet werden. Man kann die Polyesterpolyole durch Polyveresterung von organischen Polycarbonsäuren oder nihren Anhydriden mit organische: Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure und Glutarsäure. Anstelle dieser Säuren können auch ihre Anhydride, soweit diese existieren, verwendet werden.

Ferner lassen sich auch Polyesterpolyole, die sich von Lactonen ableiten, als Komponente (B) benutzen. Diese Produkte erhält man durch die Umsetzung eines ε-Caprolactons mit einem Polyol. Solche Produkte sind in der US-A-3,169,945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$- \overset{O}{\overset{\|}{C}} - (CHR)_n - CH_2O -$$

entsprechen, in der n mindestens 4, bevorzugt 4 bis 6, ist und der Substituent Wasserstoff, ein Alkylrest, ein Cycloalkylrest oder ein Alkoxyrest ist.

Als Katalysatoren können z.B. ein oder mehrere basische Stickstoffatome enthaltende Verbindungen eingesetzt werden.

Bevorzugterweise werden tertiäre Amine, wie z.B. N,N-Dimethylbenzylamin, Tributylamin, Dimethylcyclohexylamin und Dimethyl-$C_{12}/C_{14}$-amin ($C_{12}/C_{14}$ steht für eine 12 bis 14 C-Atome enthaltende aliphatische Kette) verwendet.

Der Katalysator wird in der Regel in einer Menge von 0,1 bis 2 Gew.-%, bezogen auf das aus den Komponenten (A) und (B) entstehende Zwischenprodukt, eingesetzt.

Die Reaktion zwischen den Komponenten (A) und (B) wird bei Temperaturen zwischen 100 und 190 °C, vorzugsweise zwischen 100 und 180 °C, durchgeführt.

Im zweiten Schritt des erfindungsgemäßen Verfahrens wird ein Lösemittel oder Lösemittelgemisch unter Kühlen mittels eines Sekundärkreislaufs (z.B. Kühlen über mit Wärmeträgeröl oder Wasser gefüllte Kühlschlangen) zu der Harzlösung gegeben. Als Zusatz eignen sich bevorzugt Lösemittel, die nicht mit den noch vorhandenen Epoxidgruppen reagieren können und/oder als Lösemittel dem Elektrotauchlack später ohnehin zugesetzt würden. Besonders bevorzugt sind Ketone wie z.B. Aceton, Methylethylketon, Methylisobutylketon, Mesityloxid; Acetate wie z.B. Propylacetat, Butylacetat; Ether wie z.B. Dioxan, Dibutylether; Aromaten wie z.B. Toluol, Xylol, Ethylbenzol und die Mischungen der Lösemittel. Durch vorsichtiges Anlegen eines Vakuums wird die Harzlösung zum Rückflußsieden gebracht. Ein gelegentliches Aufschäumen wird durch entsprechende Minderung des Unterdrucks unter Kontrolle gebracht. Mit sinkender Temperatur wird der Druck allmählich weiter erniedrigt, um ein gleichmäßiges Sieden zu erreichen. Ggf. kann auch kontinuierlich oder portionsweise während des Abkühlens weiteres Lösemittel zugesetzt werden.

Als Komponente (E) in Schritt (3) des erfindungsgemäßen Verfahrens können primäre und/oder sekundäre Amine verwendet werden, wobei die sekundären Amine besonders bevorzugte Komponenten (E) sind.

Bevorzugt sollte das Amin eine in Wasser lösliche Verbindung sein. Beispiele solcher Amine sind Mono- und Dialkylamine wie Methylamin, Ethylamin, Propylamin, Butylamin, Dimethylamin, Diethylamin, Dipropylamin, Methylbutylamin und dergleichen. Geeignet sind ebenfalls Alkanolamine, wie z.B. Methylethanolamin, Diethanolamin und dergleichen. Ferner sind Dialkylaminoalkylamine wie z.B. Dimethylaminoethylamin, Diethylaminopropylamin, Dimethylaminopropylamin und dergleichen geeignet. In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die Reaktion zwischen Aminen und epoxidgruppenhaltigen Verbindungen springt häufig schon bei Vermischen der Reaktionspartner an. Je nach gewünschtem Reaktionsverlauf -vor allem zur Vervollständigung der Umsetzung - ist es empfehlenswert, im Verlauf der Reaktion die Reaktionstemperatur auf 50 bis 150 ° C zu erhöhen.

Der im letzten Schritt des erfindungsgemäßen Verfahrens zugesetzte Vernetzer (F) für gesenkte Einbrenntemperaturen ist ein mit Hydroxylgruppen blockiertes Polyisocyanat. Hergestellt werden diese Vernetzer durch Umsetzung von Polyisocyanat mit dem entsprechenden Alkohol. Die Isocyanate können aliphatisch oder aromatisch sein, für Vernetzer für gesenkte Einbrenntemperaturen werden bevorzugt aromatische Isocyanate eingesetzt.

Typische Beispiele für aliphatische Polyisocyanate sind Alkylenisocyanate wie z.B. Trimethylen-, Tetramethylen-, Pentamethylen-, Hexamethylen-, 1,2-Propylen-, 1,2-Butylen-, 2,3-Butylen-, 1,3-Butylen-, Ethyliden- und Butylidendiisocyanat sowie Cycloalkylendiisocyanate wie z.B. 1,3-Cyclopentan-, 1,4-Cyclohexan-, 1,2-Cyclohexan- und Isophorondiisocyanat.

Typische Beispiele für aromatische Polyisocyanate sind Arylenisocyanate wie z.B. m-Phenylen-, p-Phenylen-, 4,4′-Diphenyl-, 1,5-Naphthalin- und 1,4-Naphthalindiisocyanat sowie Alkarylenisocyanate wie z.B. 4,4′-Diphenylenmethan-, 2,4- oder 2,6-Toluylen- oder 2,4-/2,6-Toluylen-Gemische, 4,4′-Toluidin- und 1,4-Xylylendiisocyanat sowie substituierte aromatische Systeme wie z.B. Dianisidindiisocyanate, 4,4′-Diphenyletherdiisocyanate oder Chlorodiphenylendiisocyanate, 1,3,5-Triisocyanatobenzol, 2,4,6-Triisocyanatotoluol und 4,4′-Diphenyldimethylmethan-2,2′,5,5′-Tetraisocyanat sowie polymerisierte Isocyanate.

Zum Blockieren der Isocyanatgruppe werden für Vernetzer für gesenkte Einbrenntemperaturen bevorzugt Furfurylalkohol und seine Derivate sowie $\alpha$-Hydroxyketone eingesetzt. Ganz besonders bevorzugt sind Furfurylalkohol, Hydroxyaceton und Hydroxybutanon.

Die Zugabe des oben beschriebenen Vernetzers kann direkt im Anschluß an Schritt (3) des erfindungsgemäßen Verfahrens erfolgen und die resultierende Mischung in einer Wasser/Säure-Mischung dispergiert werden, bevorzugt werden jedoch erst die Reaktionsprodukte aus Schritt (3) in einer Wasser/Säure-Mischung dispergiert und dann erst der Vernetzer zugefügt.

Zur Herstellung der Wasser/Säure-Mischungen werden organische Säuren wie z.B. Ameisensäure, Essigsäure oder Milchsäure verwendet.

Die Durchführung des erfindungsgemäßen Verfahrens zur Herstellung wäßriger Dispersionen für die Weiterverarbeitung zu Elektrotauchlacken mit niedrigen Einbrenntemperaturen wird im folgenden anhand von Beispielen erläutert. Sofern nicht anders angegeben, sind %-Angaben Gewichtsprozentangaben.

Beispiel 1

Das nachfolgende Beispiel beschreibt den Aufbau eines mit einem Monophenol plastifizierten Epoxidharzes, das in einer weiteren Reaktion mit einem Polyaminderivat zum kathodisch abscheidbaren Epoxy-Amin-Harz umgesetzt wird. In der letzten Stufe erfolgt dann die Zugabe des Vernetzers und die Herstellung einer wäßrigen Dispersion dieser Mischung.

Zunächst wird der Vernetzer (I) folgendermaßen hergestellt:

In einem geeigneten Reaktionsgefäß werden unter Stickstoff 2208 g Toluylendiisocyanat und 1512 g Methylisobutylketon vorgelegt und auf 50 ° C erwärmt. Danach läßt man 1176 g Furfurylalkohol so zulaufen, daß die Temperatur 70 ° C nicht übersteigt. Nach Ende des Zulaufs hält man 30 min diese Temperatur und gibt dann 536 g Trimethylolpropan portionsweise zu. Auch hier soll die Temperatur 70 ° C zunächst nicht übersteigen. Dann erwärmt man auf 90 ° C hält 1 Stunde diese Temperatur, setzt 168 g n-Butanol zu und kühlt ab.

Zum Aufbau des Epoxidharzes werden in einem doppelwandigen, wärmeträgerölbeheizbaren 20 kg-Reaktor mit Rührer, Rückflußkühler, Wasserabscheider, Inertgaszuleitung und Vakuumverbindung 7536 g eines Epoxidharzes auf Basis Bisphenol A mit einem Epoxidäquivalentgewicht (EEW) von 188, 1142 g Bisphenol A und 2494 g Dodecylphenol zusammen mit 588 g Xylol vorgelegt und auf 110 ° C erwärmt.

Durch Anlegen eines leichten Vakuums werden über einen Wasserabscheider Wasserspuren im Kreislaufverfahren destillativ entfernt. Sodann erwärmt man auf 130 °C und gibt 44 g N,N-Dimethylbenzylamin zu, wobei die Temperatur kurzzeitig auf 150 °C ansteigt. Man läßt anschließend auf 130 °C kühlen und hält diese Temperatur, bis das Reaktionsgemisch ein EEW von 1240 aufweist (ca. 5 Std.). Zum Abbruch der Reaktion wird nun über einen Sekundärkreislauf gekühlt und in rascher Abfolge 900 g Xylol und 208 g Butylglykol zugegeben. Durch vorsichtiges Anlegen von Vakuum wird die Harzlösung zum Rückflußsieden gebracht; ein gelegentliches Aufschäumen wird durch entsprechende Minderung des Unterdrucks unter Kontrolle gebracht. Wenn kurze Zeit später 95 °C erreicht sind, hebt man das Vakuum auf und gibt 3132 g einer 70%igen Lösung eines Umsetzungsproduktes aus 1 Mol Diethylentriamin und 2 Mol Methylisobutylketon (MIBK) in MIBK zu. Nach Abklingen der Exothermie heizt man innerhalb 30 min auf 120 °C und hält diese Temperatur weitere 2 Stunden. Eine Probe dieses Harzes weist nun folgende Kennzahlen auf:

| | |
|---|---|
| Festkörper (30 min 180 °C): | 80 % |
| Basengehalt: | 1,47 meq/g Festharz |

1531 g dieser Harzlösung wird mit 750 g des Vernetzungsmittels (I) bei Raumtemperatur gemischt und mit 32 g Eisessig versetzt. Anschließend werden 1327 g entionisiertes Wasser portionsweise eingerührt. Man homogenisiert kurze Zeit und verdünnt mit weiteren 1359 g Wasser auf 35 % Festkörper (30 min, 130 °C).

Die Dispersion wird in einer anschließenden Vakuumdestillation von flüchtigen Lösemitteln befreit, wobei das destillativ entfernte Lösemittel mengenmäßig durch Wasser ersetzt wird. Danach wird die Dispersion filtriert.

## Beispiel 2

Das nachfolgende Beispiel beschreibt den Aufbau eines mit Neopentylglykol plastifizierten Epoxidharzes, die Umsetzung dieses Harzes zu einem Epoxid-Amin-Addukt sowie das Dispergieren einer Vernetzer/Epoxid-Aminaddukt-Mischung in einer Wasser/Säure-Mischung.

Bei der Herstellung des Vernetzungsmittels (II) verfährt man wie bei Beispiel 1, jedoch wird anstelle des Furfurylalkohols Hydroxybutanon eingesetzt. Die Einwaagemengen sind:

| | |
|---|---|
| Toluylendiisocyanat | 2208 g |
| Hydroxybutanon | 1056 g |
| Trimethylolpropan | 536 g |
| Methylisobutylketon | 1464 g |
| n-Butanol | 164 g |

Zum Aufbau des Epoxidharzes werden in einem geeigneten Reaktor 763 g eines handelsüblichen Epoxidharzes auf Basis von Bisphenol A (Epoxidäquivalentgewicht EEW = 188) mit 30 g Methylisobutylketon und 106 g Neopentylglykol vorgelegt und auf 130 °C erhitzt. Dann gibt man 3 g Dimethylbenzylamin zu und hält die Temperatur bei 140 °C, bis ein EEW von 425 erreicht ist. Jetzt werden 271 g eines handelsüblichen Polyesterpolyols auf Basis von Caprolacton (OH-Zahl = 210) und 2 g Dimethylbenzylamin zugegeben. Man hält die Temperatur bei 140 °C, bis ein EEW von 1080 erreicht ist. Dann werden 170 g Toluol unter Kühlen zugesetzt und Vakuum angelegt, so daß ein kräftiges Sieden einsetzt. Man senkt die Temperatur auf 90 °C ab und gibt 60 g Methylethanolamin und 78 g eines Umsetzungsprodukts aus Diethylentriamin und Methylisobutylketon 70%ig in Methylisobutylketon zu. Die Temperatur steigt auf 110 °C und wird 1 Std. gehalten. Dann werden 85 g n-Hexylglykol zugegeben. Diese Harzlösung wird in einem Gemisch aus 1049 g entionisiertem Wasser und 29 g Eisessig dispergiert. Man kühlt auf 60 °C und gibt 885 g des Vernetzers (II) zu.

Nachdem man 30 min homogenisiert hat, werden langsam 1585 g entionisiertes Wasser untergemischt. Anschließend werden in einer Vakuumdestillation die flüchtigen Lösemittel entfernt. Dieser Lösemittelanteil

wird dann mengenmäßig durch Wasser ersetzt.

| | |
|---|---|
| Festkörper der Dispersion (30 min, 130°C) | 37 % |
| Basengehalt meq/g Festharz | 0,67 |

Vergleichsbeispiel

Man verfährt analog Beispiel 2, bis das EEW von 1080 erreicht ist. Danach fügt man 885 g des Vernetzers (II) sowie 60 g Methylethanolamin und 78 g eines Umsetzungsprodukts aus Diethylentriamin und Methylisobutylketon 70%ig in Methylisobutylketon zu. Es stellt sich eine Temperatur von 112°C ein. Diese Temperatur wird 1 Std. gehalten. Dann werden 85 g n-Hexylglykol zugegeben. Die Harzlösung wird in einem Gemisch aus 1219 g entionisiertem Wasser und 29 g Eisessig dispergiert. Man kühlt auf 60°C ab und fügt weitere 1585 g entionisiertes Wasser zu. Die Aufarbeitung der Dispersion erfolgt wie im Beispiel 2.

| | |
|---|---|
| Festkörper der Dispersion: | 36,8 % |
| Basengehalt meq/g Festharz: | 0,68 |

Aus den in Beispiel 1 und 2 sowie im Vergleichsbeispiel beschriebenen Bindemitteldispersionen werden mit einer grauen Pigmentpaste Lackbäder angesetzt.

Zur Darstellung einer grauen Pigmentpaste werden zu 953 Teilen eines handelsüblichen Epoxidharzes auf Basis Bisphenol A (Epoxidäquivalentgewicht von 890) 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80%iger, wäßriger Milchsäure gegeben. Man führt die Reaktion bei 80°C durch, bis die Säurezahl unter 1 gefallen ist.

1800 Teile dieses Produktes werden mit 2447 Teilen entionisiertem Wasser vorgelegt und mit 2460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinheit von 5 bis 7 zerkleinert. Danach gibt man 1255 Teile entionisiertes Wasser zu, um die gewünschte Pastenkonsistenz zu erreichen.

Die Lackbäder erhält man durch Mischen von:

| | |
|---|---|
| 2280 | Teilen entionisiertem Wasser |
| 25 | Teilen 10%iger Essigsäure |
| 1920 | Teilen wäßriger Vernetzer/Epoxidaminaddukt-Dispersion |
| 775 | Teilen Pigmentpaste |

Die Abscheidung der Lackfilme erfolgt bei 26°C Badtemperatur während 120 Sekunden. Hierzu werden zinkphosphatierte Bleche als Kathode geschaltet und beschichtet. Die Härtung der abgeschiedenen Filme erfolgt während 20 Minuten bei der in der Tabelle mit den Abscheidedaten angegebenen Temperatur im Umluftofen.

Die Ergebnisse der Abscheidungen sind in den folgenden Tabellen zusammengefaßt:

Abscheidedaten:

| Abscheidedaten | Beispiel 1 | Beispiel 2 | Vergleichsbeispiel |
|---|---|---|---|
| Abscheide-spannung (V) | 350 | 320 | 290 (Abriß) |
| Filmdicke (µm) | 22 | 34 | 15 |
| Einbrenntemperatur (°C) | 145 | 150 | 145 |
| FORD-Umgriff (cm) | 22,5 | 21,8 | 20,2 |

Mechanische Eigenschaften:

| Prüfverfahren | Beispiel 1 | Beispiel 2 | Vergleichsbeispiel |
|---|---|---|---|
| Erichsen-Tiefung (mm) | 9 | 7,5 | 5 |
| Gitterschnitt (0 bester, 5 schlechtester Wert) | 0 | 0 | 2 |
| Biegeprobe | in Ordnung | in Ordnung | nicht in Ordnung |
| Kugelschlagtest (Impact-Test) (m kg) | 0,69 | 0,92 | 0,05 |
| Verlauf (0 bester, 5 schlechtester Wert) | 0,5 | 0 | 4,5 |

## Patentansprüche

**1.** Verfahren zur Herstellung wäßriger, kathodisch abscheidbarer und thermisch bei Temperaturen unter 160° C und Einbrennzeiten ≦ 30 min durch zugemischte Vernetzer härtbarer Elektrotauchlacke, die als kathodisch abscheidbare Bindemittel modifizierte Epoxid-Aminaddukte und als Vernetzer mit Hydroxylgruppen blockierte Polyisocyanate enthalten, bei dem

(1)

(A) Polyepoxide, die im Durchschnitt mehr als 1 Epoxidgruppe pro Molekül enthalten und

(B) Verbindungen, die eine oder mehrere, bevorzugt 2, an aromatische und/oder (cyclo)-aliphatische Molekülfragmente gebundene Hydroxylgruppen pro Molekül enthalten,

in Anwesenheit von Katalysatoren bei höheren Temperaturen, bevorzugt zwischen 100 und 180° C, zu

(c) epoxidhaltigen Zwischenprodukten umgesetzt werden,

(3)

(E) Amine

an die im Zwischenprodukt noch vorhandenen freien Epoxidgruppen angelagert werden und entweder

(4a) diese Reaktionsprodukte in einer Wasser-Säure-Mischung dispergiert und

(F) mit Hydroxylgruppen blockierte Polyisocyanate als Vernetzer zugemischt werden oder

(4b) diesen Reaktionsprodukten

(F) mit Hydroxylgruppen blockierte Polyisocyanate als Vernetzer zugemischt werden und diese Mischung in einer Wasser-Säure-Mischung dispergiert wird,

dadurch gekennzeichnet, daß

(2) den in Stufe (1) erhaltenen epoxidgruppenhaltigen Zwischenprodukten zunächst ein Lösemittel (D) oder Lösemittelgemisch (D) unter äußerer Kühlung zugegeben wird und die entstandene Harzlösung, ggf. unter Anlegen eines Vakuums, so lange zum Rückflußsieden gebracht wird, bis die Temperatur der Lösung auf 95° c bis 20° C abgesunken ist.

**2.** Verfahren nach Anspruch 1, dadurch gekennzeichnet, daß Furfurylalkohol und/oder seine Derivate als Blockierungsmittel für das Polyisocyanat eingesetzt werden.

**3.** Verfahren nach Anspruch 1, dadurch gekennzeichnet, daß α-Hydroxyketone, insbesondere Hydroxyaceton und Hydroxybutanon, als Blockierungsmittel für das Polyisocyanat eingesetzt werden.

**4.** Verfahren nach einem der Ansprüche 1 bis 3, dadurch gekennzeichnet, daß als Lösemittel in Schritt (2) Stoffe eingesetzt werden, die nicht mit den noch vorhandenen Epoxidgruppen im Harz reagieren können.

**5.** Verfahren nach einem der Ansprüche 1 bis 4, dadurch gekennzeichnet, daß die Harzlösung in Schritt (2) auf Temperaturen ≧ 50°C abgekühlt wird.

**6.** Verfahren nach einem der Ansprüche 1 bis 5, dadurch gekennzeichnet, daß das Lösemittel nach Herstellung der wäßrigen Dispersion im Vakuum bei Temperaturen unter 65°C abgezogen wird.

## Claims

**1.** Process for the preparation of aqueous electrocoating paints which are cathodically depositable and are heat-curable at temperatures below 160°C and in baking times ≦ 30 min by means of admixed crosslinking agents, which contain modified epoxide-amine adducts as cathodically depositable binders and polyisocyanates blocked with hydroxyl groups as crosslinking agents, in which

(1)

(A) polyepoxides, which contain on average more than 1 epoxide group per molecule and

(B) compounds which contain, per molecule, one or more, preferably 2, hydroxyl groups bonded to aromatic and/or (cyclo)aliphatic molecular fragments are reacted in the presence of catalysts at elevated temperatures, preferably between 100 and 180°C, to give

(C) epoxide-containing intermediates,

(3)

(E) amines are added onto the free epoxide groups which are still present in the intermediate and either

(4a) these reaction products are dispersed in a water-acid mixture and

(F) polyisocyanates blocked with hydroxyl groups are admixed as crosslinking agent, or

(F) polyisocyanates blocked with hydroxyl groups are admixed as crosslinking agent with

(4b) these reaction products and this mixture is dispersed in a water-acid mixture,

characterised in that

(2) initially a solvent (D) or mixture of solvents (D) is added with external cooling to the intermediates containing epoxide groups and obtained in stage (1), and the resultant resin solution is refluxed, if necessary under reduced pressure, until the temperature of the solution has decreased to 95°C - 20°C.

**2.** Process according to Claim 1, characterized in that furfuryl alcohol and/or its derivatives are used as blocking agents for the polyisocyanate.

**3.** Process according to Claim 1, characterised in that α-hydroxyketones, particularly hydroxyacetone and hydroxybutanone, are used as blocking agents for the polyisocyanate.

**4.** Process according to one of Claims 1 to 3, characterised in that in stage (2) substances are used as solvents which cannot react with any epoxide groups still present in the resin.

**5.** Process according to one of Claims 1 to 4, characterised in that the resin solution in stage (2) is cooled to temperatures ≧ 50 ° C.

**6.** Process according to one of Claims 1 to 5, characterised in that the solvent is removed in vacuo at temperatures below 65 ° C after preparation of the aqueous dispersion.

**Revendications**

**1.** Procédé de fabrication de laques aqueuses d'électrodéposition, susceptibles d'être déposées à la cathode et durcissables par voie thermique à des températures inférieures à 160 ° C et des temps de cuisson ≦ 30 min. par des agents de réticulation mélangés, laques d'électrodéposition qui contiennent, comme liants susceptibles d'être déposés à la cathode, des produits d'addition époxyde-amine modifiés et, comme agents de réticulation, des polyisocyanates bloqués par des groupes hydroxyle, procédé suivant lequel :

(1)

(A) des polyépoxydes, qui contiennent, en moyenne, plus de 1 groupe époxy par molécule, et

(B) des composés qui contiennent, par molécule, un ou plusieurs, de préférence 2, groupes hydroxyle liés à des fragments moléculaires aromatiques et/ou (cyclo) aliphatiques,

sont mis à réagir, en présence de catalyseurs, à des températures élevées, de préférence, entre 100 et 180 ° C, pour obtenir

(C) des produits intermédiaires à teneur en groupes époxy,

(3)

(E) des amines

sont fixées par addition sur les groupes époxy libres encore présents dans le produit intermédiaire, et ou bien

(4a) ces produits de réaction sont dispersés dans un mélange eau-acide et

(F) sont mélangés avec des polyisocyanates bloqués par des groupes hydroxyle comme agents de réticulation, ou bien

(4b) ces produits de réaction

(F) sont mélangés avec des polyisocyanates bloqués par des groupes hydroxyle comme agents de réticulation et ce mélange est dispersé dans un mélange eauacide,

caractérisé par le fait que

(2) tout d'abord un solvant (D) ou un mélange de solvants (D) est ajouté, sous refroidissement extérieur, aux produits intermédiaires à teneur en groupes époxy obtenus à l'étape (1), et la solution de résine formée est portée à ébullition au reflux, le cas échéant avec établissement d'un vide, jusqu'à ce que la température de la solution soit abaissée à une valeur de 95 ° C à 20 ° C.

**2.** Procédé selon la revendication 1, caractérisé par le fait que l'on utilise l'alcool furfurylique et/ou ses dérivés comme agents de blocage pour le polyisocyanate.

**3.** Procédé selon la revendication 1, caractérisé par le fait que l'on utilise des $\alpha$-hydroxycétones, en particulier l'hydroxyacétone et l'hydroxybutanone comme agents de blocage pour le polyisocyanate.

**4.** Procédé selon l'une quelconque des revendications 1 à 3, caractérisé par le fait que, comme solvants à l'étape (2), sont utilisées des substances qui ne réagissent pas avec les groupes époxy encore présents dans la résine.

**5.** Procédé selon l'une quelconque des revendications 1 à 4, caractérisé par le fait que la solution de résine est refroidie à l'étape (2) à des températures ≧ 50 ° C.

**6.** Procédé selon l'une quelconque des revendications 1 à 5, caractérisé par le fait que le solvant est retiré sous vide, à des températures inférieures à 65 ° C, après la fabrication de la dispersion aqueuse.